# EUROPEAN PATENT APPLICATION

(11) **EP 2 493 206 A1**
(43) Date of publication of application: **29.08.2012**
(21) Application number: 12155547.8
(22) Date of filing: 15.02.2012
(51) Int. Cl.: H04N 21/482, H04N 21/63, H04N 21/81, G06F 17/30, H04N 1/00, G11B 27/034, H04N 21/854, H04N 21/2743, H04N 21/274, H04N 21/858, H04N 21/8547

(54) **Program, information processing apparatus and information processing method to change the content location information of a digital slideshow**

(30) Priority: 25.02.2011 JP 2011040716
(71) Applicant: Sony Corporation, Tokyo 108-0075 (JP)
(72) Inventor: Igari, Kazuma, Tokyo (JP)
(74) Representative: Beder, Jens

(57) **Abstract**

An information processing apparatus includes a control unit that retrieves control information for reproducing a plurality of content data. The control information includes order information indicating an order of reproduction of the plurality of content data. The control information also includes location information indicative of a location of the plurality of content data. In addition, the control unit controls a communication unit to send a signal to transfer (S204) content data to an address associated with a remote device. Further, the control unit changes (S205) the location information in the control information to another location information indicating a location of the plurality of content data sent to the remote device. The control unit additionally controls the communication unit to send (S206) the changed control information.

## Description

### CROSS-REFERENCE TO RELATED APPLICATIONS.

The present disclosure contains subject matter related to that disclosed in Japanese Priority Patent Application JP 2011-040716 filed in the Japan Patent Office on February 25, 2011, the entire content of which is hereby incorporated by reference.

### BACKGROUND

The present disclosure relates to a program, an information processing apparatus and an information processing method.

In recent years, there is disclosed a technique for sequentially reproducing plural images by a slideshow in various information processing apparatuses (see Japanese Patent Application Laid-Open No. 2005-227826, for example). The images sequentially reproduced by an information processing apparatus are sequentially displayed on a display device. With the slideshow, by setting a reproduction time differently for each image, the images are sequentially displayed. Data for managing the reproduction times of the respective images is called time-line data, and location information and the reproduction times of the images to be reproduced are managed with the time-line data.

The time-line data can be variously created by a creator. Thus, a user may want to view the images by conducting the slideshow according to not only his/her created time-line data but also his/her friend's created time-line data.

### SUMMARY

Various aspects and features of the invention are defined in the appended claims.
However, according to the technique disclosed in Japanese Patent Application Laid-Open No. 2005-227826, there is not disclosed a method for efficiently sharing the time-line data among plural terminals. Thus, it would be preferable to employ a method for efficiently sharing the time-line data among plural terminals.

In one embodiment, an information processing apparatus comprises a control unit configured to retrieve control information for reproducing a plurality of content data, the control information including order information indicating an order of reproduction of the plurality of content data, the control information also including location information indicative of a location of the plurality of content data, to control a communication unit to send a signal to transfer content data to an address associated with a remote device, to change the location information in the control information to another location information indicating a location of the plurality of content data sent to the remote device, and to control the communication unit to send the changed control information.

The control unit is preferably configured to generate a list of the location information of the plurality of content data based on a category and to generate the control information based on the list.
The control unit is preferably configured to classify the plurality of content data into a plurality of categories based on metadata and to generate a plurality of lists of the location information of the plurality of content data based on the plurality of categories.
The control unit is preferably configured to generate a plurality of lists of the location information of the plurality of content data based on a plurality of categories of the plurality of content data, to select at least one list from the plurality of lists, and to generate the control information based on the at least one list.
The order information is preferably defined by at least one of a reproduction time and a start time.
The order information is preferably defined by a sequence of the location information.
The location information is preferably defined by a Uniform Resource Locator (URL).
The another location information is preferably defined by a Uniform Resource Locator (URL).
The control unit is preferably configured to refer to upload information indicating whether the respective content data has been uploaded.
The upload information is preferably defined by a Uniform Resource Locator (URL).
The control unit preferably omits a signal to transfer one of the plurality of content data, if the upload information of the one of the plurality of content data indicates that the one of the plurality of content data has been uploaded.
The information processing apparatus preferably comprises a memory that stores one of the plurality of content data, wherein the control unit is configured to change the location information of the one of the plurality of content data in the control information from a local path to the one of the plurality of content data in the memory, to a Uniform Resource Locator (URL).
The information processing apparatus preferably comprises a memory that stores one of the plurality of content data, wherein the control unit is configured to change the location information of the one of the plurality of content data in the control information, based on a determination that the location information defines a local path to the one of the plurality of content data in the memory.
The another location information is preferably received in response to a log in to the remote device.
Each of the plurality of content data is preferably defined by a respective image.
Each of the plurality of content data preferably includes the respective image and at least one of position information and date information.
The control unit is preferably configured to classify the plurality of content data into a plurality of categories based on the at least one of the position information and the date information and to generate a list of the location information based on one of the plurality of categories.
The respective content data preferably includes the upload information.
In another embodiment, an information processing method includes retrieving control information for reproducing a plurality of content data, the control information including order information indicating an order of reproduction of the plurality of content data, the control information also including location information indicative of a location of the plurality of content data, sending a signal to transfer content data to an address associated with a remote device, changing the location information in the control information to another location information indicating a location of the plurality of content data sent to the remote device, and sending the changed control information.
In a further embodiment, a computer-readable storage medium is encoded with computer executable instructions, wherein the instructions, when executed by a processing unit, cause the processing unit to perform a method comprising retrieving control information for reproducing a plurality of content data, the control information including order information indicating an order of reproduction of the plurality of content data, the control information also including location information indicative of a location of the plurality of content data, controlling a communication unit to send a signal to transfer content data to an address associated with a remote device, changing the location information in the control information to another location information indicating a location of the plurality of content data sent to the remote device, and controlling the communication unit to send the changed control information.

As described above, according to the present disclosure, the time-line data can be efficiently shared among plural terminals.

### BRIEF DESCRIPTION OF THE DRAWINGS

Embodiments of the invention will be described now with references to the drawings throughout which like parts are referred to by like references and in which
FIG. 1 is a diagram showing a structure of an information processing system according to an embodiment of the present disclosure;
FIG. 2 is a block diagram showing a functional structure of a terminal according to an embodiment;
FIG. 3 is a diagram showing an exemplary structure of image data according to an embodiment;
FIG. 4 is a diagram showing an exemplary task select screen displayed on the terminal according to an embodiment;
FIG. 5 is a diagram showing an exemplary date granularity used in the terminal according to an embodiment;
FIG. 6 is a diagram showing an exemplary position granularity used in the terminal according to an embodiment;
FIG. 7 is a diagram showing exemplary conversions between position information and a category by the terminal according to an embodiment;
FIG. 8 is a diagram showing an exemplary list select screen displayed on the terminal according to an embodiment;
FIG. 9 is a diagram showing an exemplary template used in the terminal according to an embodiment;
FIG. 10 is a diagram showing exemplary time-line data obtained by the terminal according to an embodiment;
FIG. 11 is a diagram showing an exemplary reproduction screen displayed on the terminal according to an embodiment;
FIG. 12 is a flowchart showing a flow of a time-line data creating operation performed by the terminal according to an embodiment;
FIG. 13 is a diagram showing an exemplary upload start screen displayed on the terminal according to an embodiment;
FIG. 14 is a diagram showing an exemplary upload complete screen displayed on the terminal according to an embodiment;
FIG. 15 is a diagram showing an exemplary task select screen (during upload) displayed on the terminal according to an embodiment;
FIG. 16 is a flowchart showing a flow of a time-line data uploading operation performed by the terminal according to an embodiment;
FIG. 17 is a diagram showing an exemplary edit select screen displayed on the terminal according to an embodiment;
FIG. 18 is a diagram showing an exemplary template select screen displayed on the terminal according to an embodiment;
FIG. 19 is a diagram showing an exemplary template screen displayed on the terminal according to an embodiment;
FIG. 20 is a diagram showing an exemplary template edit screen displayed on the terminal according to an embodiment;
FIG. 21 is a diagram showing an exemplary title edit screen displayed on the terminal according to an embodiment;
FIG. 22 is a diagram showing an exemplary edit screen displayed on the terminal according to an embodiment;
FIG. 23 is a diagram showing an exemplary album screen displayed on the terminal according to an embodiment;
FIG. 24 is a diagram showing an exemplary setting screen displayed on the terminal according to an embodiment;
FIG. 25 is a block diagram showing a functional structure of the terminal according to an embodiment;
FIG. 26 is a diagram showing an exemplary template select screen displayed on the terminal according to an embodiment;
FIG. 27 is a diagram showing an exemplary template screen displayed on the terminal according to an embodiment;
FIG. 28 is a diagram showing an exemplary reproduction screen displayed on the terminal according to an embodiment; and
FIG. 29 is a block diagram showing a hardware structure of an information processing apparatus according to an embodiment.

### DETAILED DESCRIPTION

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

In this specification and the appended drawings, plural structural elements having substantially the same function and structure may be discriminated by different alphabets following the same numeral. For example, plural structural elements having substantially the same function and structure are discriminated as terminals 100A and 100B as necessary. When plural structural elements having substantially the same function and structure do not need to be particularly discriminated, these elements are denoted with only the same numeral. For example, when the terminals 100A and 100B do not need to be particularly discriminated, the terminals are simply denoted with terminal 100. For example, image data G is discriminated as image data G1 and image data G2 as necessary, but when the items of image data do not need to be particularly discriminated as G1 and G2, the items of image data are simply denoted as image data G.

The explanation will be made in the following order.
1. An embodiment
   1.1. Structure of information processing system
   1.2. Functions of registration terminal
   1.3. Functions of display terminal
   1.4. Hardware structure of information processing apparatus
2. Conclusion

### <1. An embodiment>

### [1.1. Structure of information processing system]

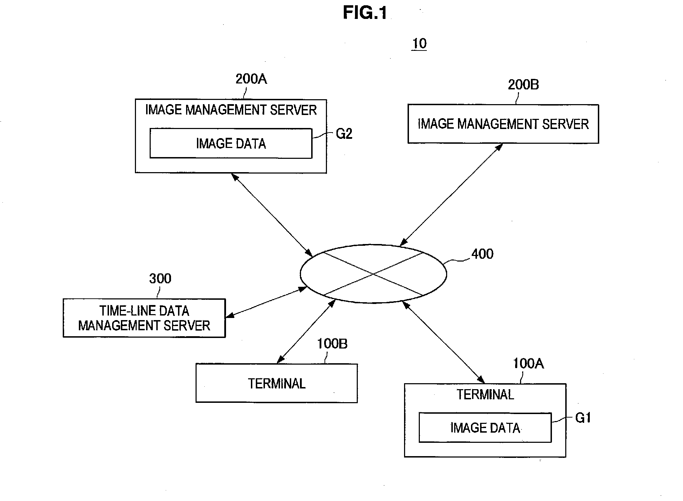

A structure of an information processing system according to an embodiment of the present disclosure will be first described with reference to FIG. 1. As shown in FIG. 1, the information processing system 10 according to an embodiment of the present disclosure includes terminals 100A and 100B, image management servers 200A and 200B, and a time-line data management server 300. The terminals 100A, 100B, the image management servers 200A, 200B and the time-line data management server 300 can communicate via a network 400. The number of time-line data management servers, image management servers and terminals in the system are not particularly limited.

The time-line data management server 300 can manage time-line data (which is also called "control information") for a slideshow. The time-line data is for managing respective reproduction times of plural images, and respective items of location information and reproduction times of the images to be reproduced are managed in the time-line data. The time-line data will be described below in detail. The location information of the image uses a Uniform Resource Locator (URL) of the image, for example. The time-line data management server 300 can provide the time-line data to the terminal 100 and reproduce the images according to the time-line data in response to a request from the terminal 100.

The image management server 200 can manage the images to be reproduced according to the time-line data. In the example of FIG. 1, the images to be reproduced according to the time-line data are managed by the image management server 200A in whichthe images are contained as image data G2. The image data G2 contains the images and their metadata (such as position information indicating where the images were photographed and date information indicating when the images were photographed) as described later.

A predetermined limitation may be imposed on the acquisition of the images from the image management server 200. For example, only the terminal 100 which was able to log in to the image management server 200 may acquire the images from the image management server 200. For example, an authentication is made based on user information (such as a user ID and a password) previously registered in the image management server 200 and user information transmitted from the terminal 100. When the authentication normally completes, the terminal 100 may log in to the image management server 200. When the authentication fails, the terminal 100 may not log in to the image management server 200.

The terminal 100A is used by a user A, for example. The terminal 100A functions as a registration terminal for uploading time-line data to the time-line data management server 300. The time-line data to be uploaded to the time-line data management server 300 may be created by the terminal 100A, for example, or may be acquired by any method. The images to be reproduced according to the time-line data may be image data G1 of the terminal 100A or may be the image data G2 of the image management server 200A.

The terminal 100B is used by a user B, for example. The terminal 100B can receive the time-line data uploaded to the time-line data management server 300 by the terminal 100A and reproduce the images according to the time-line data. In other words, the terminal 100B can function as a display terminal for displaying the images reproduced according to the time-line data. Herein, the explanation will be made assuming that the user A and the user B are different, but the user A and the user B may be the same.

In the present specification, there will be described an efficient method in which the terminal 100A uploads the time-line data and the terminal 100B displays the images reproduced according to the uploaded time-line data. With the method, the terminal 100A and the terminal 100B can efficiently share the time-line data. However, the present technique is not limited to the method, and for example, the terminal 100B may further have the functions of the terminal 100A and the terminal 100A may further have the functions of the terminal 100B.

### [1.2. Functions of registration terminal]

### (Outline of functions of terminal 100A)

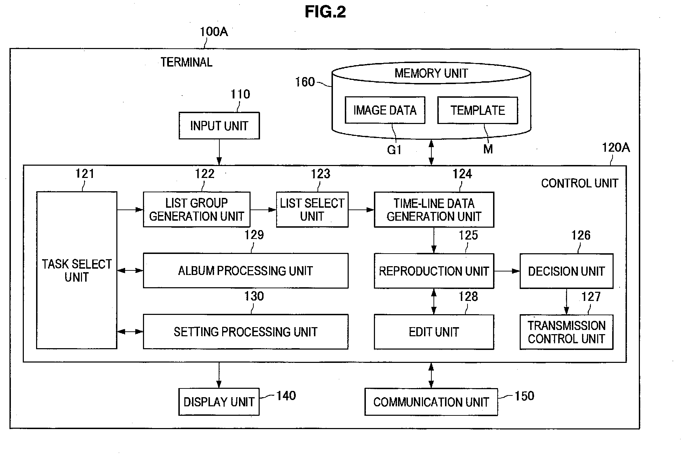

The functions of the terminal 100A according to an embodiment of the present disclosure will be described below with reference to FIGS. 2 to 24. FIG. 2 is a block diagram showing a functional structure of the terminal 100A according to an embodiment of the present disclosure. As shown in FIG. 2, the terminal 100A includes an input unit 110, a control unit 120A, a display unit 140, a communication unit 150 and a memory unit 160.

The input unit 110 has a function of receiving operation information from the user A. The input unit 110 outputs the operation information received from the user A to the control unit 120A. The input unit 110 is configured of an input device, for example. The display unit 140 has a function of displaying various items of information under the control of the control unit 120A. The display unit 140 is configured of a display device, for example.

The communication unit 150 has a function of communicating with the image management server 200 and the time-line data management server 300 under the control of the control unit 120A. The communication unit 150 is configured of a communication device, for example. The communication unit 150 can function as a transmission unit and a reception unit. The memory unit 160 has a function of storing therein various items of information used by the control unit 120A. The memory unit 160 is configured of a storage device, for example.

The control unit 120A has a function of controlling the operations of the terminal 100A, and can control the operations of the terminal 100A based on the operation information output from the input unit 110, for example. The control unit 120A includes a task select unit 121, a list group generation unit 122, a list select unit 123, a time-line data generation unit 124, a reproduction unit 125, a decision unit 126, a transmission control unit 127, an edit unit 128, an album processing unit 129 and a setting processing unit 130. The functions of the respective function blocks will be described below in detail. The control unit 120A is configured of a CPU, a ROM and a RAM, for example.

### (Time-line data creation processing by terminal 100A)

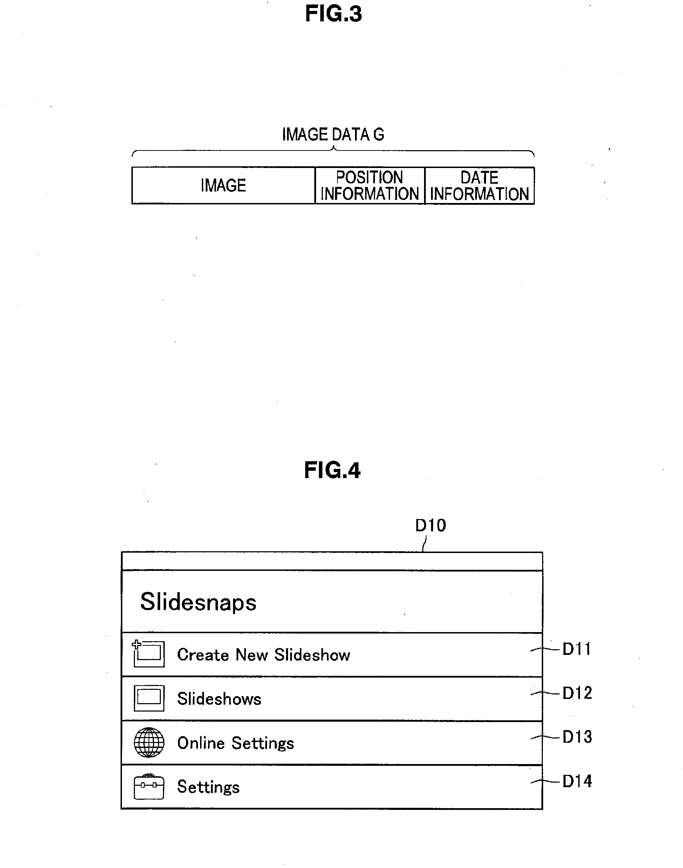

The time-line data creation processing by the terminal 100A will be described below with reference to FIGS. 3 to 12. FIG. 3 is a diagram showing an exemplary structure of image data G according to an embodiment of the present disclosure. As shown in FIG. 3, the image data G has an image and its metadata (such as position information and date information). The metadata may be any kind of data, and the position information and the date information are exemplary metadata. The position information indicates where the image was photographed, and the date information indicates when the image was photographed.

FIG. 4 is a diagram showing an exemplary task select screen displayed on the terminal 100A according to an embodiment of the present disclosure. The task select screen D10 is displayed by the display unit 140 under the control of the task select unit 121 after the terminal 100A is activated, for example. As shown in FIG. 4, the task select screen D10 contains items D11 to D14 for selecting a task, for example.

For example, when the input unit 110 receives the operation information for selecting the item D11, a main operator shifts from the task select unit 121 to the list group generation unit 122 under the control of the control unit 120A. The list group generation unit 122 starts to operate after receiving the operation information for selecting the item D11, but the list group generation unit 122 may start to operate before receiving the operation information for selecting the item D11 after the terminal 100A is activated.

The list group generation unit 122 classifies location information of the images into plural categories and thereby generates a group of lists of the location information per category. The respective items of location information of the images to be classified may be the location information of the images contained in the image data G1 stored in the memory unit 160 or may be the location information of the images contained in the image data G2 in the image management server 200A. For example, the list group generation unit 122 may classify the items of location information of the images contained in the image data G2, only when the terminal 100A uploads the image data G2 to the image management server 200A,. The respective items of location information of the images are retrieved by the list group generation unit 122.

When acquiring the respective items of location information of the images, the list group generation unit 122 classifies the respective items of location information of the images into plural categories. The classifying method may employ various methods. For example, the list group generation unit 122 may classify the respective items of location information of the images into plural categories based on the metadata of the images. The metadata of the images may be retrieved together with the respective items of location information of the images, for example.

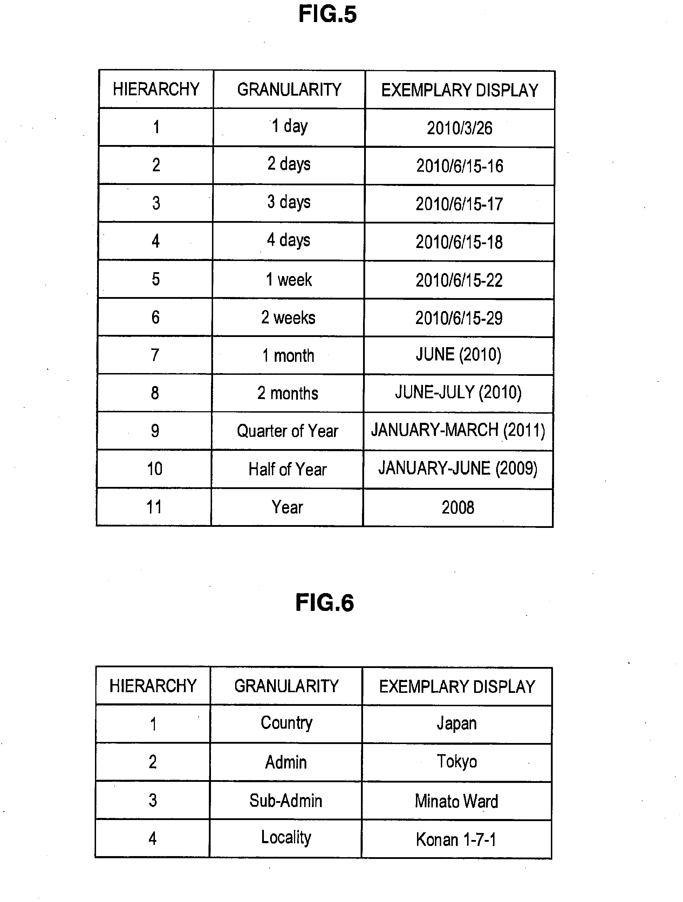

There will be first described with reference to FIG. 5 a method in which the list group generation unit 122 classifies the respective items of location information of the images into plural categories based on the date information of the images. FIG. 5 is a diagram showing an exemplary date granularity used by the terminal 100A according to an embodiment of the present disclosure. The list group generation unit 122 can classify the respective items of location information of the images into plural categories based on various kinds of granularity shown in FIG. 5. For example, when classifying the respective items of location information of the images into plural categories based on the granularity "1 day", the list group generation unit 122 can categorize the location information of the images having the same date information into the same category and categorize the location information of the images having different date information into different categories.

Subsequently, there will be described with reference to FIG. 6 a method in which the list group generation unit 122 classifies the respective items of location information of the images into plural categories based on the position information of the images. FIG. 6 is a diagram showing an exemplary position granularity used by the terminal 100A according to an embodiment of the present disclosure. The list group generation unit 122 can classify the respective items of location information of the images into plural categories based on various kinds of granularity shown in FIG. 6.

For example, when classifying the respective items of location information of the images into plural categories based on the granularity "Country", the list group generation unit 122 can categorize the location information of the images belonging to the same country into the same category and categorize the location information of the images belonging to different countries into different categories. The list group generation unit 122 can more finely classify the respective items of location information of the images by changing the granularity from "Country", to "Admin", to "Sub-Admin", and to "Locality."

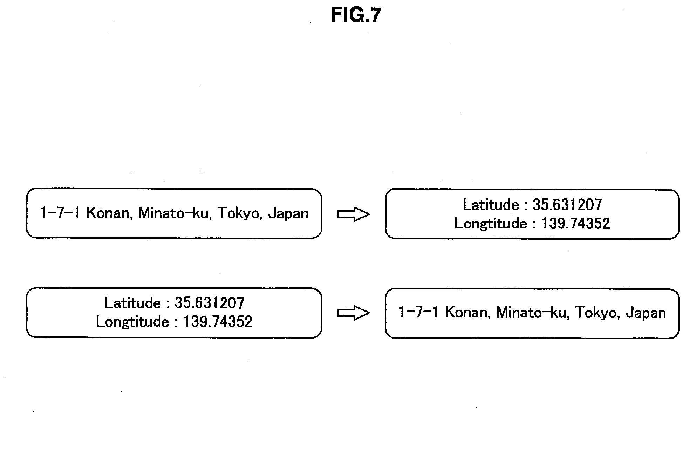

FIG. 7 is a diagram showing exemplary conversions between position information and category by the terminal 100A according to an embodiment of the present disclosure. As shown in FIG. 7, for example, when classifying the location information of the image with coordinates "latitude 35.631207 north and longitude 139.74352 east" based on the granularity "Country", the list group generation unit 122 can classify the location information of the image into the category "Japan."

Similarly, for example, when classifying the location information of the image based on the granularity "Admin", the list group generation unit 122 can classify the location information of the image into the category "Tokyo." For example, when classifying the location information of the image based on the granularity "Sub-Admin", the list group generation unit 122 can classify the location information of the image into the category "Minato Ward", and for example, when classifying the location information of the image based on the granularity "Locality", the list group generation unit 122 can classify the location information of the image into the category "Konan 1-7-1."

With the method described above, the list group generation unit 122 can classify the respective items of location information of the images into plural categories. When the respective items of location information of the images are classified into plural categories by the list group generation unit 122, the main operator shifts from the list group generation unit 122 to the list select unit 123 under the control of the control unit 120A.

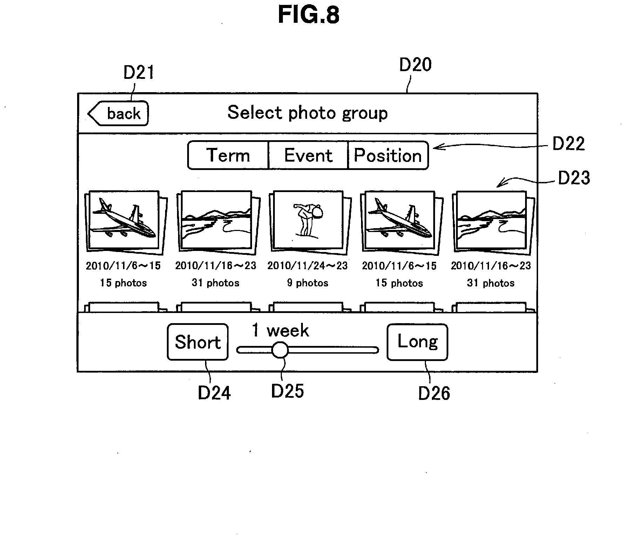

Subsequently, there will be described with reference to FIG. 8 a method in which the list select unit 123 selects at least one list from the group of lists generated by the list group generation unit 122. FIG. 8 is a diagram showing an exemplary list select screen displayed on the terminal 100A according to an embodiment of the present disclosure. The list select screen D20 is displayed by the display unit 140 under the control of the list select unit 123, for example.

As shown in FIG. 8, the list select screen D20 includes a button D21 for returning to a previous screen, a classifying method D22, a thumbnail D23 corresponding to each list in the group of lists, and objects D24 to D26 for adjusting the granularity, for example. In the example of FIG. 8, "Term", which is a classifying method based on the date information, is selected as the classifying method D22. With reference to FIG. 8, other classifying methods such as "Event" based on an event and "Position" based on position information are included in the classifying method D22. When an event (such as a sports festival) is added as metadata to an image, the location information may be classified by the event as metadata. The event may be added as the metadata by the input unit 110.

Similarly, for the thumbnail D23 corresponding to each list in the group of lists, when a thumbnail image is added as metadata to an image, the thumbnail image can be used as metadata. As described above, the metadata of the images can be retrieved together with the respective items of location information of the images, for example.

When the input unit 110 receives the operation information for selecting at least one list from the group of lists, the list select unit 123 selects at least one list from the group of lists based on the operation information. When at least one list is selected by the list select unit 123, the main operator shifts from the list select unit 123 to the time-line data generation unit 124 under the control of the control unit 120A.

The time-line data generation unit 124 generates time-line data based on at least one list selected by the list select unit 123. The time-line data generating method by the time-line data generation unit 124 is not particularly limited. For example, when the memory unit 160 stores a time-line data template M therein, the time-line data generation unit 124 can generate the time-line data based on the list selected by the list select unit 123 and the template M stored in the memory unit 160.

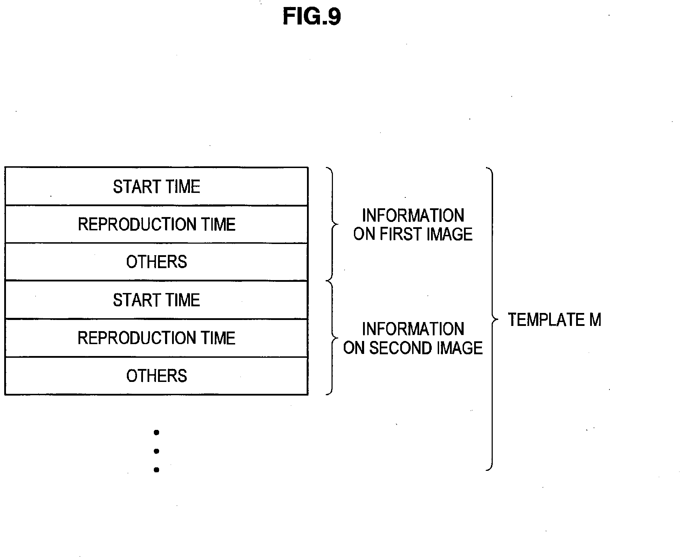

FIG. 9 is a diagram showing an exemplary template M used by the terminal 100A according to an embodiment of the present disclosure. As shown in FIG. 9, the template M used by the terminal 100A includes a start time, a reproduction time and others for each of the images. In the example of FIG. 9, information on a first image and information on a second image are included in the template M, but the number of items of information on the images should not be limited. The details of the image display (effects such as display position, display size and moving method) may be additionally included.

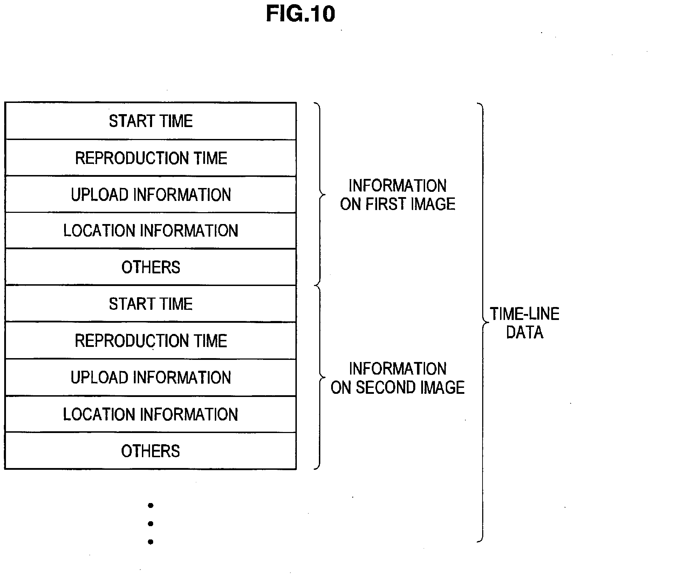

The template M may include a start time of Background Music (BGM), a reproduction time and others, and may include a transition mask, wallpaper, a slideshow's explanation (title or detailed explanation), and a thumbnail image. The time-line data generation unit 124 can generate the time-line data shown in FIG. 10 based on the list (the respective items of location information of the images) selected by the list select unit 123 and the template M stored in the memory unit 160, for example.

"Uploaded information" indicating previously-uploaded or "non-uploaded information" indicating non-uploaded may be set in "upload information" shown in FIG. 10, and for example, the time-line data generation unit 124 can set the "non-uploaded information" in the "upload information." Thus, the "upload information" field is a flag, in one embodiment. When the time-line data is generated by the time-line data generation unit 124, the main operator shifts from the time-line data generation unit 124 to the reproduction unit 125 under the control of the control unit 120A. The "uploaded information" may be a URL indicating the upload destination, for example.

The reproduction unit 125 can function as an acquisition unit for acquiring the time-line data. The time-line data may be acquired from the time-line data generation unit 124, for example, and when the time-line data is stored in the memory unit 160, it may be acquired from the memory unit 160. The reproduction unit 125 can reproduce the images according to the acquired time-line data. The reproduction unit 125 can reproduce the images until the "reproduction time" elapses from the "start time" included in the time-line data, for example.

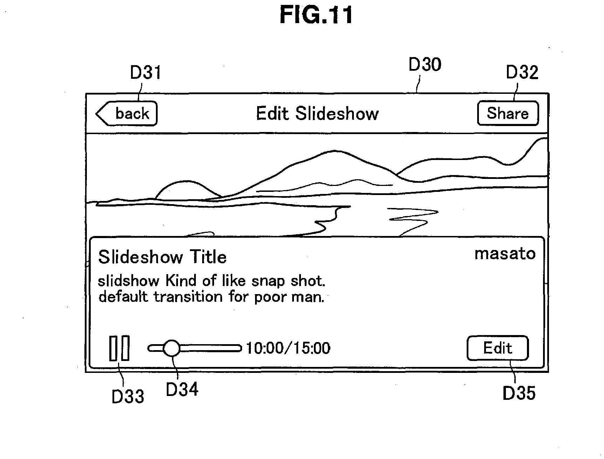

FIG. 11 is a diagram showing an exemplary reproduction screen displayed on the terminal 100A according to an embodiment of the present disclosure. As shown in FIG. 11, a reproduction screen D30 includes a button D31 for returning to a previous screen, a button D32 for sharing the time-line data with other terminals, a reproduction/stop button D33, an object D34 for adjusting a reproduction position, and a template edit button D35, for example.

When the input unit 110 receives the operation information for selecting the button D32 for sharing the time-line data with other terminals, the main operator shifts from the reproduction unit 125 to the communication unit 150 under the control of the control unit 120A. When the input unit 110 receives the operation information for selecting the template edit button D35, the main operator shifts from the reproduction unit 125 to the edit unit 128 under the control of the control unit 120A. The reproduction unit 125 may continue its operation even after the main operator shifts to the edit unit 128.

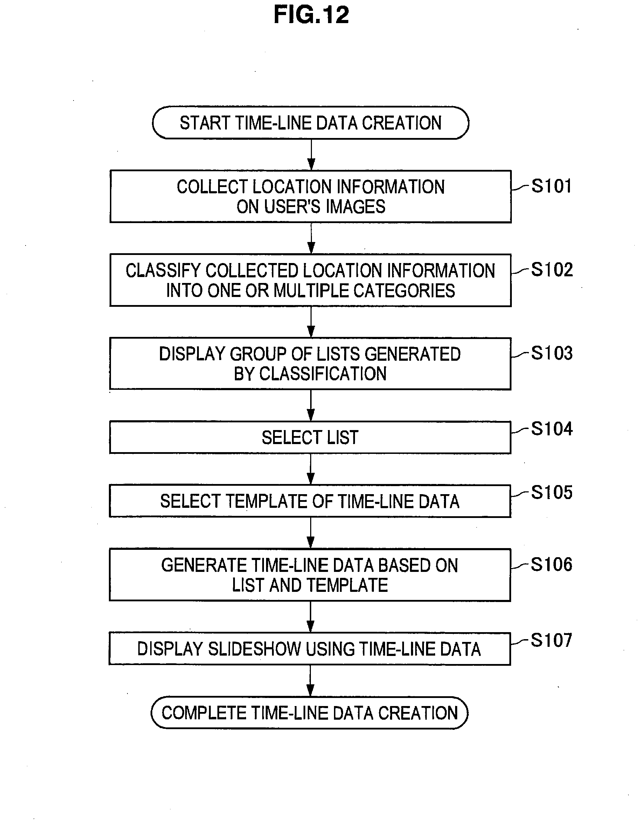

Subsequently, there will be described a time-line data creating operation performed by the terminal 100A according to an embodiment of the present disclosure with reference to FIG. 12. FIG. 12 is a flowchart showing a flow of the time-line data creating operation performed by the terminal 100A according to an embodiment of the present disclosure. In the time-line data creating operation, the list group generation unit 122 first collects the respective items of location information of the user's images (S101), and classifies the collected location information of the images into one or multiple categories (S102).

Subsequently, the display unit 140 displays a group of lists generated by the classification (S103). The list select unit 123 selects a list based on the operation information received by the input unit 110 (S104). The time-line data generation unit 124 selects a time-line data template based on the operation information received by the input unit 110 (S105), and generates the time-line data based on the list and the template (S106). The display unit 140 uses the time-line data to perform a slideshow display (S107). With the above, the time-line data creating operation terminates.

### (Time-line data upload processing by terminal 100A)

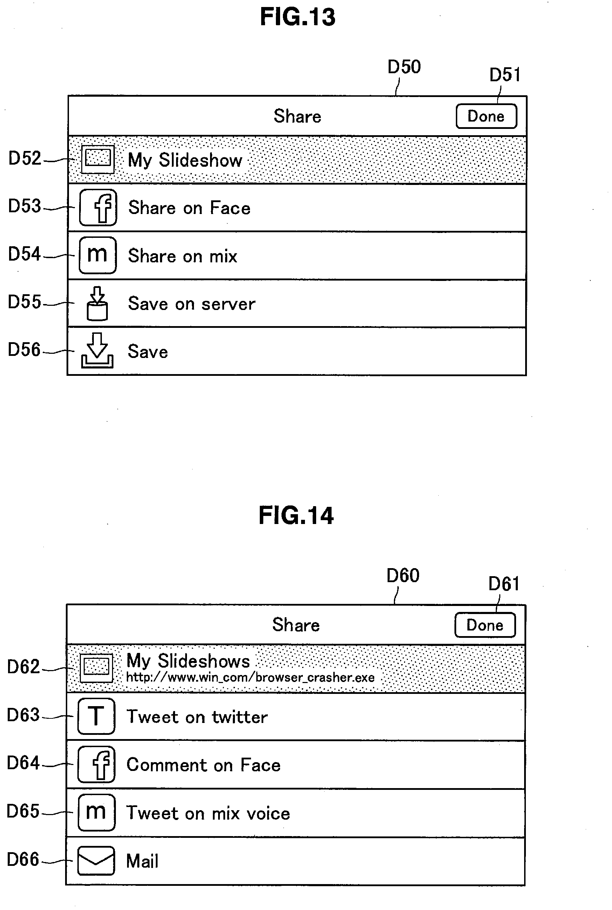

Subsequently, the time-line data upload processing by the terminal 100A will be described with reference to FIGS. 13 to 16. FIG. 13 is a diagram showing an exemplary upload start screen displayed on the terminal 100A according to an embodiment of the present disclosure. The upload start screen D50 is displayed by the display unit 140 under the control of the control unit 120A, for example.

As shown in FIG. 13, the upload start screen D50 includes a button D51 for starting to upload the time-line data, a button D52 for selecting a slideshow, a button D53 for selecting the image management server 200A as the image upload destination, a button D54 for selecting the image management server 200B as the image upload destination, a button D55 for directly sharing the time-line data with other terminal 100B, and a button D56 for storing the time-line data in the memory unit 160, for example.

When the input unit 110 receives the operation information for selecting the button D51 for starting to upload the time-line data, the communication unit 150 starts to upload the time-line data to the time-line data management server 300. When the location information included in the time-line data acquired by the reproduction unit 125 indicates a location of an image stored in the memory unit 160, the communication unit 150 uploads the image stored in the memory unit 160 to the image management server 200.

The communication unit 150 uploads the image and the time-line data in which the location information is changed to information on the image upload destination to the time-line data management server 300. The location information can be changed by the control unit 120A. In this way, the location information is changed in the terminal 100A to the information on the image upload destination and then the time-line data is uploaded to the time-line data management server 300, thereby easily reproducing the image in the terminal 100B according to the time-line data.

Before the communication unit 150 uploads the image, the decision unit 126 may decide whether the "uploaded information" indicating previously-uploaded is added to the location information. When the decision unit 126 decides that the "uploaded information" is added as the "upload information" to the location information, the communication unit 150 may limit (or omit) the upload of the images stored in the memory unit 160 to the image management server 200. Thereby, the processing of uploading the same images as the previously-uploaded images is omitted, thereby reducing a time to upload the images.

The "uploaded information" may be added by the transmission control unit 127 when an image is uploaded. In other words, when the image stored in the memory unit 160 is uploaded by the memory unit 160 to the image management server 200, the transmission control unit 127 can add the "uploaded information" indicating previously-uploaded as the "upload information" to the location information.

FIG. 14 is a diagram showing an exemplary upload complete screen displayed on the terminal 100A according to an embodiment of the present disclosure. The upload complete screen D60 is displayed by the display unit 140 under the control of the control unit 120A, for example.

As shown in FIG. 14, the upload complete screen D60 includes a button D61 for completing the upload of the time-line data, a button D62 for selecting a slideshow, a button D63 for selecting to tweet, a button D64 for writing a comment for the image in the image management server 200A, a button D65 for selecting to tweet the image in the image management server 200B, and a button D66 for selecting Mail to send an e-mail to the user B of the terminal 100B.

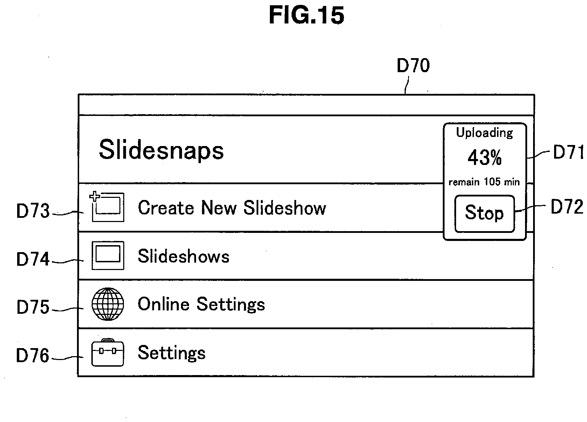

FIG. 15 is a diagram showing an exemplary task select screen (during upload) displayed on the terminal 100A according to an embodiment of the present disclosure. The task select screen D70 is displayed by the display unit 140 under the control of the control unit 120A, for example.

As shown in FIG. 15, the task select screen D70 includes items D73 to D76 for selecting a task, for example. The operation when each of the items D73 to D76 for selecting a task is selected is the same as the operation when each of the items D11 to D14 for selecting a task shown in FIG. 4 is selected. The task select screen D70 additionally includes an object D71 for indicating a progress of the upload and a button D72 for stopping the upload.

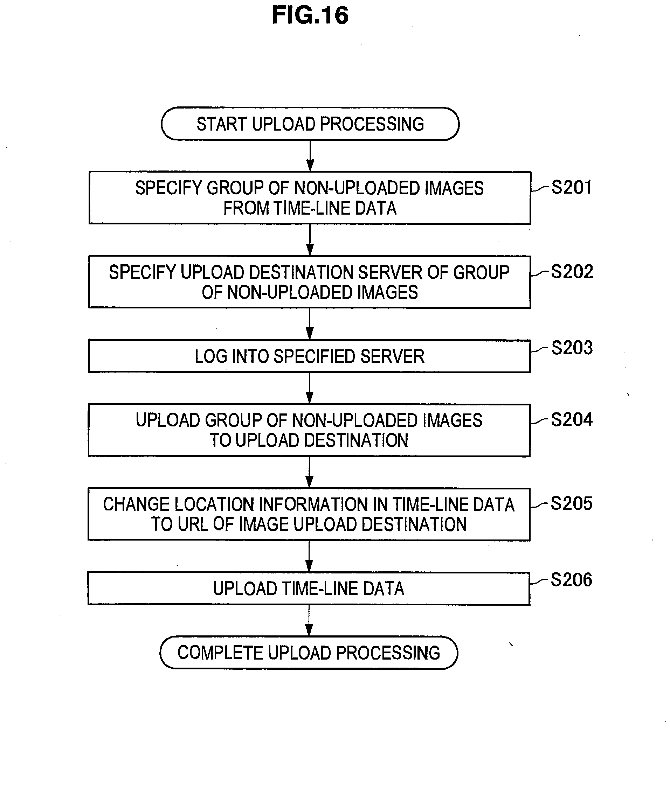

Subsequently, the time-line data uploading operation performed by the terminal 100A according to an embodiment of the present disclosure will be described with reference to FIG. 16. FIG. 16 is a flowchart showing a flow of the time-line data uploading operation. In the time-line data uploading operation, the decision unit 126 first specifies a group of non-uploaded images from the time-line data acquired by the reproduction unit 125 (S201), and identifies the image management server 200 as a portal to the upload destination of the group of non-uploaded images (S202).

Subsequently, the terminal 100A logs in to the image management server 200 (S203) specified, for example, using the upload start screen D50 shown in FIG.. 13. In one embodiment, the image management server 200 is the upload destination of the group of non-uploaded images. In another embodiment, the image management server 200 transmits a URL of the upload destination to the terminal 100A following the log in at S203. This latter embodiment is used when the image management server is part of a content delivery network (CDN). The communication unit 150 uploads the group of non-uploaded images to the upload destination (S204). The control unit 120A changes the location information in the time-line data to the URL of the image upload destination (S205). For example, in one embodiment, the location information, prior to the change, is a local path to an image on the memory unit 160. The control unit 120A determines that the location information should be changed if the upload information is non-uploaded information. Alternatively, the control unit 120A determines that the location information should be changed if the location information is a local path. The control unit also determines the location information should be changed if there is an inconsistency between the URL of the location information and a URL of the image upload destination. The communication unit 150 uploads the time-line data (S206). With the above, the time-line data uploading operation terminates.

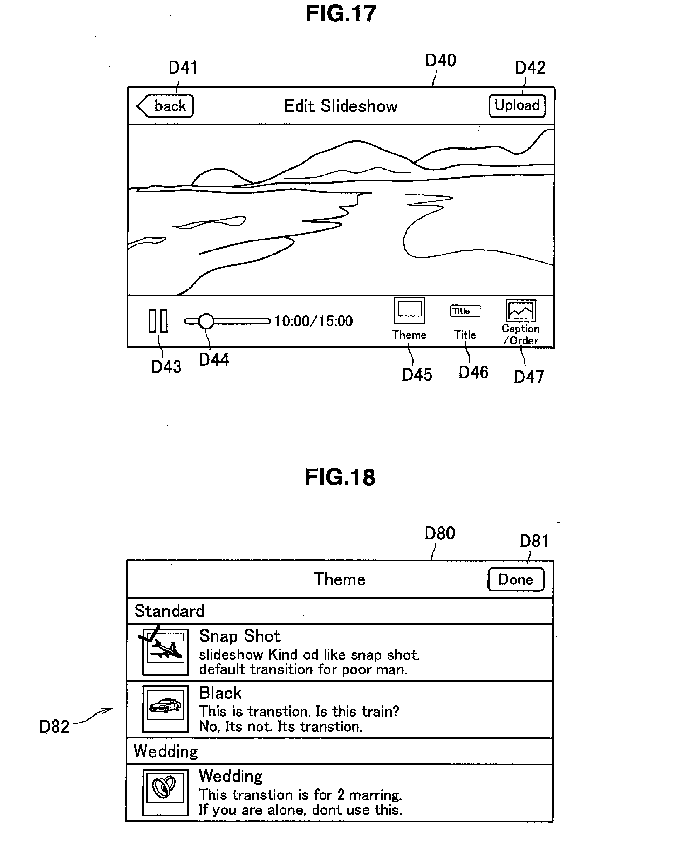

Subsequently, a template edit processing by the terminal 100A will be described with reference to FIGS. 17 to 20. FIG. 17 is a diagram showing an exemplary edit select screen displayed on the terminal 100A according to an embodiment of the present disclosure. The edit select screen D40 is displayed by the display unit 140 under the control of the edit unit 128, for example. As shown in FIG. 17, the edit select screen D40 includes a button D41 for returning to the previous screen, a button D42 for transiting to the upload start screen D50, a reproduction/stop button D43, an object D44 for adjusting a reproduction position, a template edit button D45, a button D46 for editing a title, and a button D47 for performing a caption edit or changing an order, for example.

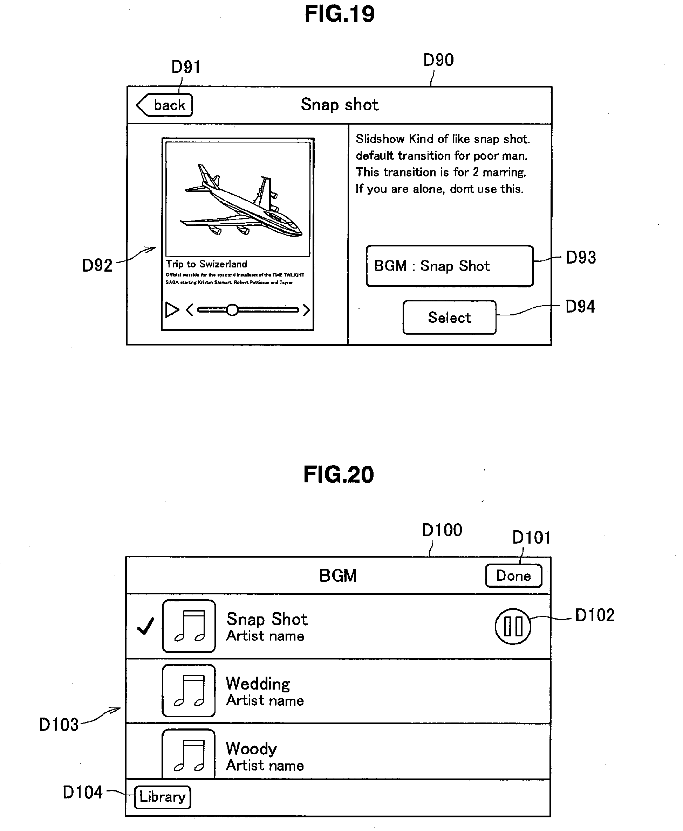

When the input unit 110 receives the operation information for selecting the template edit button D35, a template select screen D80 shown in FIG. 18 is displayed by the display unit 140 under the control of the edit unit 128. FIG. 18 is a diagram showing an exemplary template select screen displayed on the terminal 100A according to an embodiment of the present disclosure. As shown in FIG. 18, the template select screen D80 includes a button D81 for confirming the selection of the template and a button D82 for selecting a template, for example. When the input unit 110 receives the operation information for selecting the button D82 for selecting a template, a template screen D90 shown in FIG. 19 is displayed by the display unit 140 under the control of the edit unit 128.

FIG. 19 is a diagram showing an exemplary template screen displayed on the terminal 100A according to an embodiment of the present disclosure. As shown in FIG. 19, the template screen D90 includes a button D91 for returning to a previous screen, information D93 indicating BGM set in the template, and a button D94 for selecting BGM, for example. When the input unit 110 receives the operation information for selecting the button D94 for selecting BGM, a template edit screen D100 shown in FIG. 20 is displayed by the display unit 140 under the control of the edit unit 128.

FIG. 20 is a diagram showing an exemplary template edit screen displayed on the terminal 100A according to an embodiment of the present disclosure. As shown in FIG. 20, the template edit screen D100 includes a button D101 for confirming the selection of a BGM, a toggle button D102 for selecting a stop/reproduction of a BGM, a button D103 for selecting a BGM, and a button D104 for selecting a BGM from a library, for example. When the input unit 110 receives the operation information for selecting the button D101 1 for confirming the selection of a BGM, the edit unit 128 can change a template BGM by the selected BGM.

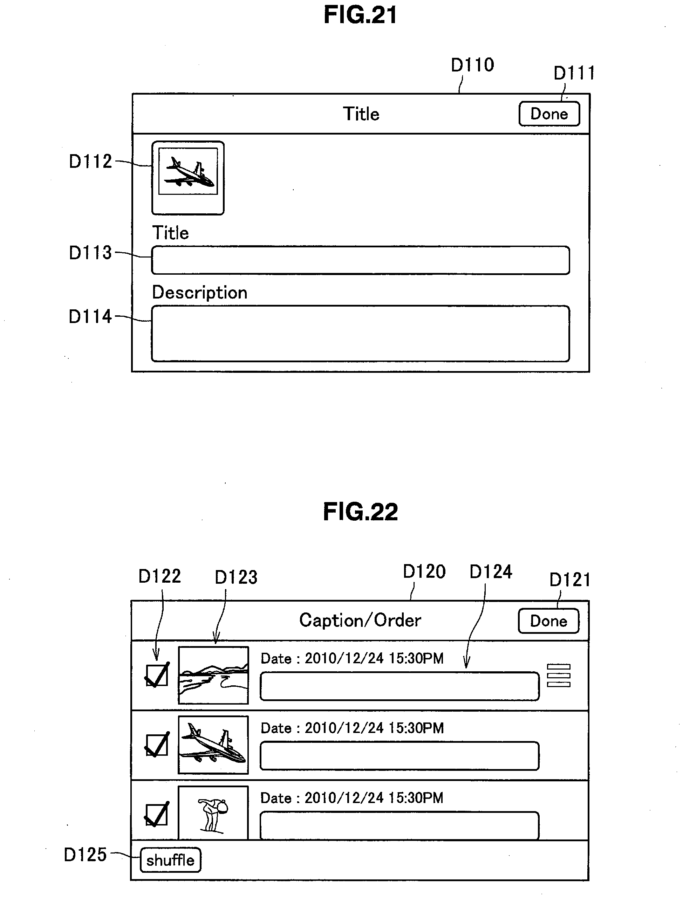

Returning to FIG. 17, the description will go on. When the input unit 110 receives the operation information for selecting the button D46 for editing a title, a title edit screen D110 shown in FIG. 21 is displayed by the display unit 140 under the control of the edit unit 128. FIG. 21 is a diagram showing an exemplary title edit screen displayed on the terminal 100A according to an embodiment of the present disclosure. As shown in FIG. 21, the title edit screen D110 includes a button D111 for confirming the input of a title and a detailed explanation, an area D112 for a slideshow, an area D113 into which a title is to be input, and an area D114 into which a detailed explanation is to be input, for example.

When the input unit 110 receives the operation information for selecting the button D111 for confirming the input of a title and a detailed explanation, the edit unit 128 can change the title and detailed explanation of the template by the input title and detailed explanation.

Returning to FIG. 17, the description will go on. When the input unit 110 receives the operation information for selecting the button D47 for performing a caption edit or changing an order, an edit screen D120 shown in FIG. 22 is displayed by the display unit 140 under the control of the edit unit 128. FIG. 22 is a diagram showing an exemplary edit screen displayed on the terminal 100A according to an embodiment of the present disclosure. As shown in FIG. 22, the edit screen D120 includes a button D121 for confirming the input of a caption edit or order change, an input column D122 for designating a reproduction order, an area D123 for a slideshow, an area D124 into which a caption is to be input, and a button D125 for shuffling the reproduction order, for example.

When the input unit 110 receives the operation information for selecting the button D121 for confirming the input of a caption edit or changing an order, the edit unit 128 can change the caption and image reproduction order of the template by the input caption and order.

Returning to FIG. 4, the description will go on. For example, when the input unit 110 receives the operation information for selecting the item D12, the main operator shifts from the task select unit 121 to the reproduction unit 125 under the control of the control unit 120A. When the main operator shifts to the reproduction unit 125, the reproduction unit 125 can acquire the time-line data and reproduce the images according to the acquired time-line data.

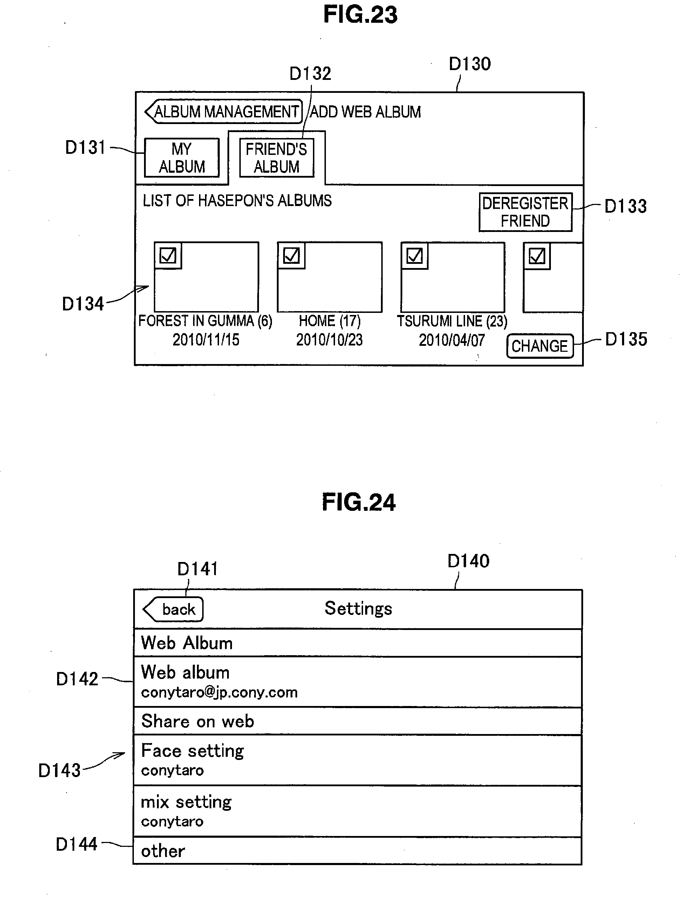

When the input unit 110 receives the operation information for selecting the item D14, the main operator shifts from the task select unit 121 to the album processing unit 129 under the control of the control unit 120A. FIG. 23 is a diagram showing an exemplary album screen displayed on the terminal 100A according to an embodiment of the present disclosure. An album screen D130 is displayed by the display unit 140 under the control of the album processing unit 129, for example.

As shown in FIG. 23, the album screen D130 includes an object D131 for selecting a user A's album on a Web server, an obj ect D132 for selecting a user A's friend's album on a Web server, a button D133 for deregistering a friend, an area D134 in which an album is to be displayed, and a button D135 for changing a selected album, for example.

Returning to FIG. 4, the description will go on. For example, when the input unit 110 receives the operation information for selecting the item D13, the main operator shifts from the task select unit 121 to the setting processing unit 130 under the control of the control unit 120A. FIG. 24 is a diagram showing an exemplary setting screen displayed on the terminal 100A according to an embodiment of the present disclosure. The setting screen D140 is displayed by the display unit 140 under the control of the setting processing unit 130, for example.

As shown in FIG. 24, the setting screen D140 includes a button D141 for returning to a previous screen, an item D142 for selecting a processing for an album on a Web server, an item D143 for setting a login to the image management server 200, and an item D144 for selecting other operations (such as help and version information display), for example.

### [1.3. Functions of display terminal]

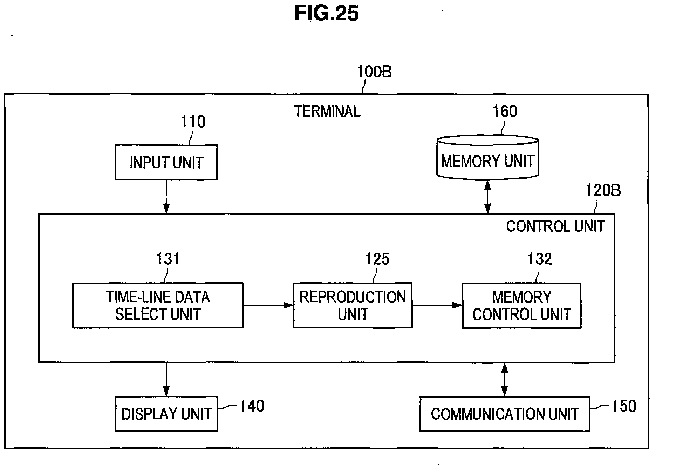

The functions of the terminal 100B according to an embodiment of the present disclosure will be described below with reference to FIGS. 25 to 28. FIG. 25 is a block diagram showing a functional structure of the terminal 100B according to an embodiment of the present disclosure. As shown in FIG. 25, the terminal 100B includes the input unit 110, a control unit 120B, the display unit 140, the communication unit 150 and the memory unit 160.

When the location information included in the time-line data in the time-line data management server 300 indicates a location of an image uploaded to the image management server 200, the communication unit 150 receives the image from the image management server 200. The display unit 140 reproduces the image received by the communication unit 150 according to the time-line data received by the communication unit 150. The display unit 140 can display the reproduced image.

As described above, the location information is changed by the terminal 100A and then the time-line data is uploaded to the time-line data management server 300. Thus, the image can be easily received from the image management server 200 based on the location information changed by the terminal 100A.

The image received by the communication unit 150 may be reproduced according to the time-line data selected by a time-line data select unit 131. After the image reproduction is completed according to the time-line data, a memory control unit 132 may control a processing of storing the time-line data in the memory unit 160. The memory control unit 132 may control based on the operation information received by the input unit 110.

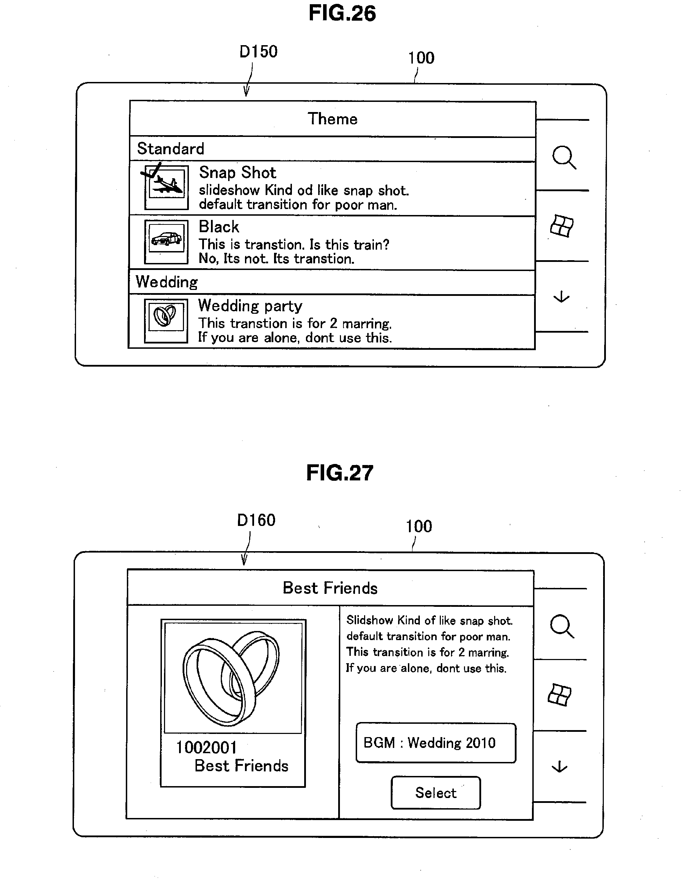

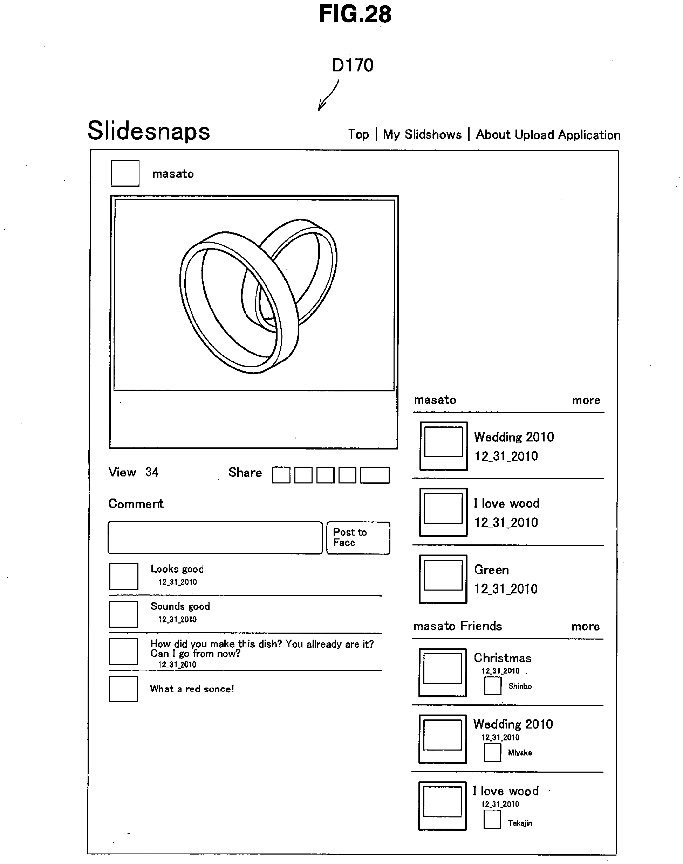

FIG. 26 is a diagram showing an exemplary template select screen D150 displayed on the terminal 100A according to an embodiment of the present disclosure. FIG. 27 is a diagram showing an exemplary template screen D160 displayed on the terminal 100A according to an embodiment of the present disclosure. FIG. 28 is a diagram showing an exemplary reproduction screen D170 displayed on the terminal 100A according to an embodiment of the present disclosure.

### [1.4. Hardware structure of information processing apparatus]

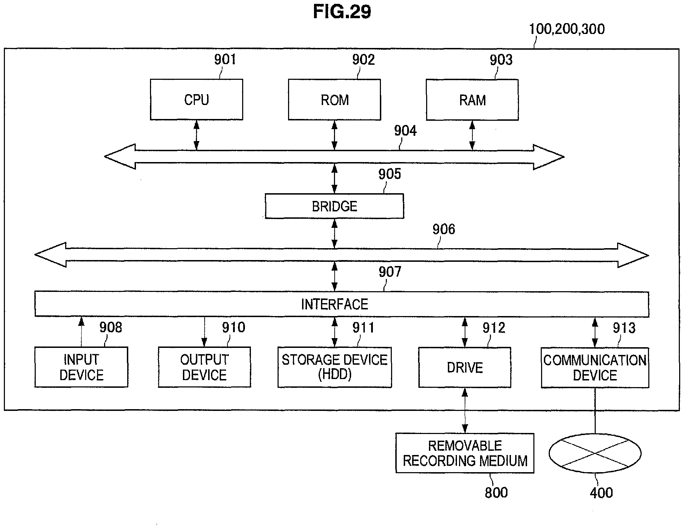

A hardware structure of an information processing apparatus according to an embodiment of the present disclosure will be described below with reference to FIG. 29. FIG. 29 is a block diagram showing the hardware structure of the information processing apparatus according to an embodiment of the present disclosure.

In the above examples, the terminal 100, the image management server 200 and the time-line data management server 300 correspond to the information processing apparatus. The information processing apparatus mainly includes a CPU 901, a ROM 902, a RAM 903, a host bus 904, a bridge 905, an external bus 906, an interface 907, an input device 908, an output device 910, a storage device 911, a drive 912 and a communication device 913.

The CPU 901 functions as an arithmetic processing device and a control device, and entirely or partially controls the operations inside the information processing apparatus according to various programs recorded in the ROM 902, the RAM 903, the storage device 911 or a removable recording medium 800. The CPU 901 is a processing means that executes various algorithms described in this disclosure. The ROM 902 stores therein programs or computing parameters to be used by the CPU 901. The RAM 903 temporarily stores therein programs to be used in the execution of the CPU 901 or parameters timely changing in the execution of the programs. The ROM 902 and the RAM 903 are examples of a storing means. The components are interconnected via the host bus 904 configured of an internal bus such as CPU bus.

The host bus 904 is connected to the external bus 906 such as Peripheral Component Interconnect/Interface (PCI) bus via the bridge 905.

The input device 908 is a user-operating operation unit such as a mouse, a keyboard, a touch panel, a button, a switch or a lever. The input device 908 may be a remote control unit using an infrared ray or other radio wave, or an external connection device such as a cell phone or a PDA corresponding to an operation of the information processing apparatus. The input device 908 is configured of an input control circuit for generating an input signal based on the information input by the user by use of the operation unit, for example, and outputting it to the CPU 901. A user of the information processing apparatus can input various items of data or designate processing operations on the information processing apparatus by operating the input device 908. The input device 908 is an exemplary input means.

The output device 910 is configured of a display device such as a CRT display device, a liquid crystal display device, a plasma display device, an EL display device or a lamp, an audio output device such as a speaker or headphones, or a device capable of visually or aurally notifying acquired information to the user such as a printer device, a cell phone or a facsimile. The output device 910 outputs the results obtained through various processing performed by the information processing apparatus, for example. Specifically, the display device displays the results obtained through various processing performed by the information processing apparatus in text or image. On the other hand, the audio output device converts an audio signal made of reproduced audio data or acoustic data into an analog signal and outputs the analog signal. The output device 910 is an output means.

The storage device 911 is a data storage device configured as the exemplary memory unit of the information processing apparatus, and is configured of a magnetic storage device such as a Hard Disk Drive (HDD), a semiconductor storage device, an optical storage device or a magnetooptical storage device, for example. The storage device 911 stores therein programs and various items of data executed by the CPU 901, and acoustic signal data and image signal data acquired from the outside. The storage device 911 is another example of a storing means.

The drive 912 is a recording medium reader/writer, and is incorporated in or externally attached to the information processing apparatus. The drive 912 reads information recorded in the removable recording medium 800 such as a mounted magnetic disk, an optical disk, a magnetooptical disk or a semiconductor memory, and outputs it to the RAM 903. The drive 912 can write records into the removable recording medium 800 such as a mounted magnetic disk, an optical disk, a magnetooptical disk or a semiconductor memory. The removable recording medium 800 is a DVD medium, an HD-DVD medium, a Blu-ray medium, a compact flash (CF) (trademark), a memory stick, or a Secure Digital (SD) memory card, for example. The removable recording medium 800 may be an Integrated Circuit (IC) card or an electronic device mounting a non-contact type IC chip thereon, for example. The removable recording medium 800 is also an example of a storing means.

The communication device 913 is a communication interface configured of a communication device for connecting to the network 400, for example. The communication device 913 is a communication card for wired or wireless Local Area Network (LAN), Bluetooth or Wireless USB (WUSB), a router for optical communication, a router for Asymmetric Digital Subscriber Line (ADSL), or a modem for various communications, for example. The communication device 913 can exchange an acoustic signal and the like with Internet or other communication devices, for example. The communication device 913 is a communication means. The network 400 connected to the communication device 913 may be configured of a wired or wireless network, and may be the Internet, a home LAN, an infrared communication, a radio wave communication or a satellite communication, for example.

The exemplary hardware structure capable of realizing the functions of the information processing apparatus according to an embodiment of the present disclosure has been described above. The respective components may be configured with general-purpose members or may be configured in hardware specific to the respective component functions. Thus, the hardware structure to be utilized may be changed as necessary according to a technical level when an embodiment of the present disclosure is implemented.

### <2. Conclusion>

As described above, the location information is changed by the terminal 100A and then the time-line data is uploaded to the time-line data management server 300 according to an embodiment of the present disclosure. Thus, the image can be easily received from the image management server 200 based on the location information changed by the terminal 100A.

It should be understood by those skilled in the art that various modifications, combinations, sub-combinations and alterations may occur depending on design requirements and other factors insofar as they are within the scope of the appended claims or the equivalents thereof.

For example, the respective steps in the processing performed by the information processing apparatus in the present specification are not necessarily performed in a time line in the order described in the flowchart. For example, the respective steps in the processing performed by the information processing apparatus may be processed in a different order from the order described in the flowchart or may be processed in parallel.

There can be created a computer program for causing the hardware such as the CPU 901, the ROM 902 and the RAM 903 incorporated in the information processing apparatus to function like the respective components in the above information processing apparatus. A storage medium storing the computer program therein is also provided. In one embodiment, the storage medium is transitory and is embodied in a propagating wave encoded with the computer program or in the software itself. In another embodiment, the storage medium is non-transitory and is embodied in a memory storing the computer program.

The present technique can employ the following structures.
(1) A program for causing a computer to execute:
   storing an image;
   generating control information including location information indicative of a location of the image;
   uploading the stored image on an image management server when the location information included in the control information indicates the location of the stored image;
   changing the location information included in the control information to information indicating an upload destination of the image; and
   uploading the control information.
(2) The program according to (1), for causing the computer to execute:
   deciding whether uploaded information indicating previously-uploaded is added to the location information; and
   limiting the stored image from being uploaded on the image management server when the uploaded information is decided as being added to the location information,
(3) The program according to (1), for causing the computer to execute:
   adding uploaded information indicating previously-uploaded to the location information when the stored image is uploaded on the image management server,
(4) The program according to any one of (1) to (3), for causing the computer to execute:
   classifying multiple items of location information into a plurality of categories and generating a group of lists of the location information per category;
   selecting at least one list from the generated group of lists; and
   generating the control information based on the at least one selected list.
(5) The program according to (4), for causing the computer to execute:
   further storing a template of the control information; and
   generating the control information based on the selected list and the stored template.
(6) The program according to (5), for causing the computer to execute editing the stored template.
(7) An information processing apparatus including:
   a memory unit for storing an image therein;
   a transmission unit; and
   a control unit for:
      generating control information including location information indicative of a location of the image;
      controlling the transmission unit to upload the image stored in the memory unit on an image management server when the location information included in the control information indicates the location of the image stored in the memory unit,;
      changing the location information included in the control information to information indicating an upload destination of the image; and controlling the transmission unit to upload the control information.
(8) The information processing apparatus according to (7), further including:
   a decision unit for deciding whether uploaded information indicating previously-uploaded is added to the location information,
   wherein when the decision unit decides that the uploaded information is added to the location information, the transmission unit restricts the image stored in the memory unit from being uploaded on the image management server.
(9) The information processing apparatus according to (7) or (8), further including:
   a transmission control unit for, when the image stored in the memory unit is uploaded on the image management server by the transmission unit, adding uploaded information indicating previously-uploaded to the location information.
(10) The information processing apparatus according to any one of (7) to (9), further including:
   a list group generation unit for classifying multiple items of location information into a plurality of categories and generating a group of lists of the location information per category;
   a list select unit for selecting at least one list from the group of lists generated by the list group generation unit; and
   a control information generation unit for generating the control information based on the at least one list selected by the list select unit.
(11) The information processing apparatus according to (10),
   wherein the memory unit further stores a template of the control information therein, and
   the control information generation unit generates the control information based on the list selected by the list select unit and the template stored in the memory unit.
(12) The information processing apparatus according to (11), further including:
   an edit unit for editing the template stored in the memory unit.
(13) An information processing method including:
   storing an image;
   generating control information including location information indicative of a location of the image;
   uploading the stored image on an image management server when the location information included in the control information indicates the location of the stored image;
   changing the location information included in the control information to information indicating an upload destination of the image; and
   uploading the control information.
(14) A program for causing a computer to function as an information processing apparatus, the information processing apparatus including:
   a reception unit for, when location information indicating a location of an image to be reproduced included in control information in a control information management server indicates a location of an image uploaded on the image management server, receiving the image from the image management server; and
   a reproduction unit for reproducing the image received by the reception unit according to the control information received by the reception unit.
(15) An information processing apparatus including:
   a reception unit for receiving control information including location information indicative of a location of an image to be reproduced from a control information management server, and receiving the image from the image management server when the location information included in the control information indicates a location of an image uploaded on an image management server; and
   a reproduction unit for reproducing the image received by the reception unit according to the control information received by the reception unit.
(16) An information processing method including:
   receiving control information including location information indicative of a location of an image to be reproduced from a control information management server, and receiving the image from the image management server when the location information included in the control information indicates a location of an image uploaded on an image management server; and
   reproducing the received image according to the received control information.

## Claims

1. An information processing apparatus, comprising:
a control unit configured
to retrieve control information for reproducing a plurality of content data, the control information including order information indicating an order of reproduction of the plurality of content data, the control information also including location information indicative of a location of the plurality of content data,
to control a communication unit to send a signal to transfer content data to an address associated with a remote device,
to change the location information in the control information to another location information indicating a location of the plurality of content data sent to the remote device, and
to control the communication unit to send the changed control information.

2. The information processing apparatus according to claim 1, wherein the control unit is configured to generate a list of the location information of the plurality of content data based on a category and to generate the control information based on the list.

3. The information processing apparatus according to claim 1 or 2, wherein the control unit is configured to classify the plurality of content data into a plurality of categories based on metadata and to generate a plurality of lists of the location information of the plurality of content data based on the plurality of categories.

4. The information processing apparatus according to any one of claims 1 to 3, wherein the control unit is configured to generate a plurality of lists of the location information of the plurality of content data based on a plurality of categories of the plurality of content data, to select at least one list from the plurality of lists, and to generate the control information based on the at least one list.

5. The information processing apparatus according to any one of claims 1 to 4, wherein the order information is defined by at least one of a reproduction time and a start time.

6. The information processing apparatus according to any one of claims 1 to 4, wherein the order information is defined by a sequence of the location information.

7. The information processing apparatus according to any one of claims 1 to 4, wherein the location information is defined by a Uniform Resource Locator (URL).

8. The information processing apparatus according to claim 1, wherein the another location information is defined by a Uniform Resource Locator (URL).

9. The information processing apparatus according to any one of claims 1 to 8, wherein the control unit is configured to refer to upload information indicating whether the respective content data has been uploaded.

10. The information processing apparatus according to claim 9, wherein the upload information is defined by a Uniform Resource Locator (URL).

11. The information processing apparatus according to claim 9 or 10, wherein the control unit omits a signal to transfer one of the plurality of content data, if the upload information of the one of the plurality of content data indicates that the one of the plurality of content data has been uploaded.

12. The information processing apparatus according to any one of claims 1 to 11, further comprising:
a memory that stores one of the plurality of content data, wherein the control unit is configured to change the location information of the one of the plurality of content data in the control information from a local path to the one of the plurality of content data in the memory, to a Uniform Resource Locator (URL).

13. The information processing apparatus according to any one of claims 1 to 12, further comprising:
a memory that stores one of the plurality of content data, wherein the control unit is configured to change the location information of the one of the plurality of content data in the control information, based on a determination that the location information defines a local path to the one of the plurality of content data in the memory.

14. The information processing apparatus according to any one of claims 1 to 13, wherein the another location information is received in response to a log in to the remote device.

15. The information processing apparatus according to any one of claims 1 to 14, wherein each of the plurality of content data is defined by a respective image.

16. The information processing apparatus according to claim 15, wherein each of the plurality of content data includes the respective image and at least one of position information and date information.

17. The information processing apparatus according to claim 16, wherein the control unit is configured to classify the plurality of content data into a plurality of categories based on the at least one of the position information and the date information and to generate a list of the location information based on one of the plurality of categories.

18. The information processing apparatus according to claim 9, wherein the respective content data includes the upload information.

19. An information processing method, comprising:
retrieving control information for reproducing a plurality of content data, the control information including order information indicating an order of reproduction of the plurality of content data, the control information also including location information indicative of a location of the plurality of content data;
sending a signal to transfer content data to an address associated with a remote device;
changing the location information in the control information to another location information indicating a location of the plurality of content data sent to the remote device; and
sending the changed control information.

20. A computer-readable storage medium encoded with computer executable instructions, wherein the instructions, when executed by a processing unit, cause the processing unit to perform a method comprising:
retrieving control information for reproducing a plurality of content data, the control information including order information indicating an order of reproduction of the plurality of content data, the control information also including location information indicative of a location of the plurality of content data;
controlling a communication unit to send a signal to transfer content data to an address associated with a remote device;
changing the location information in the control information to another location information indicating a location of the plurality of content data sent to the remote device; and
controlling the communication unit to send the changed control information.
